# EUROPEAN PATENT SPECIFICATION

(11) **EP 4 057 732 B1**
(45) Date of publication and mention of the grant of the patent: **09.10.2024**
(21) Application number: 19951822.6
(22) Date of filing: 08.11.2019
(51) Int. Cl.: H04W 72/231, H04L 1/1867

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(43) Date of publication of application: 14.09.2022
(73) Proprietor: NTT DOCOMO, INC., Chiyoda-ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/043990
(87) International publication number: WO 2021/090500

(56) References cited:
- EP-A1- 2 575 386
- EP-A1- 2 824 956
- WO-A1-2018/171704
- WO-A1-2019/193732
- US-A1- 2012 252 447
- US-A1- 2015 043 501
- US-A1- 2016 105 875
- NOKIA ET AL.: "Summary of Thursday offline discussion on PUSCH enhancements for NR eURLLC (AI 7.2.6.3", 3GPP TSG RAN WG1 #98B RL-1911631, 20 October 2019 (2019-10-20), pages 1 - 41, XP051798874
- HUAWEI: "RANI agreements for Rel-16 eURLLC", 3GPP TSG RAN WG1 #98B RL-1911728, 20 October 2019 (2019-10-20), pages 1 - 30, XP051812939
- NTT: "Remaining issues for enhanced configured grant transmission", 3GPP TSG RAN WG1 #99 RL-1912889, 22 November 2019 (2019-11-22), pages 1 - 10, XP051823669

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In existing LTE systems (for example, LTE Rel. 8 to 15), a user terminal (User Equipment (UE)) transmits uplink control information (UCI) by using at least one of a UL data channel (for example, Physical Uplink Shared Channel (PUSCH)) and a UL control channel (for example, Physical Uplink Control Channel (PUCCH)).

For example, the UCI may include retransmission control information (also referred to as Hybrid Automatic Repeat reQuest Acknowledgement (HARQ-ACK), ACK/NACK, A/N, etc.) for downlink shared channel (Physical Downlink Shared Channel (PDSCH), scheduling request (SR), channel state information (CSI), and the like.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010. Further prior art is known from published patent applications US2016/105875, EP2824956, US2012/252447, WO2018/171704, US2015/043501, and EP2575386. T

### Summary of Invention

### Technical Problem

Future radio communication systems (e.g., 5G or NR) are expected to involve a plurality of types of communication (also referred to as traffic types, use cases, services, communication types, and the like) under different required conditions (requirements, communication requirements) examples of which include: higher speed and larger capacity (eMBB: enhanced Mobile Broad Band, for example), a massive amount of terminals (mMTC: massive Machine Type Communication, for example), and ultrahigh reliability and low latency (URLLC: Ultra Reliable and Low Latency Communications, for example). The requirement may be any requirement related to at least one of latency, reliability, capacity, speed, and performance, for example.

It is assumed in the NR after Rel-16 that a downlink control information format (for example, a new DCI format) to be used for scheduling a signal or a channel corresponding to a given traffic type or requirement is supported. In addition, it is also assumed that a higher layer parameter corresponding to the new DCI format is configured.

However, how to control configuration or application of the new DCI format or the higher layer parameter that is to be newly supported has not been sufficiently studied.

Thus, an object of the present disclosure is to provide a terminal and a radio communication method capable of appropriately controlling communication even in a case where at least one of the new DCI format and the higher layer parameter is supported in a future radio communication system.

### Solution to Problem

A terminal according to an aspect of the present disclosure includes a receiving section configured to receive first information including one or more higher layer parameters for a first-type configured grant-based uplink shared channel, and a control section configured to determine a higher layer parameter to be applied from the first information on the basis of a notification by higher layer signaling.

### Advantageous Effects of Invention

According to one aspect of the present disclosure, communication can be appropriately controlled even in a case where at least one of a new DCI format and a higher layer parameter is supported in a future radio communication system.

### Brief Description of Drawings

FIG. 1 is a diagram illustrating an example of control as to whether or not to apply a new higher layer parameter.
FIG. 2 is a diagram illustrating another example of control as to whether or not to apply a new higher layer parameter.
FIG. 3 is a diagram illustrating an example of a schematic configuration of a radio communication system according to an embodiment.
FIG. 4 is a diagram illustrating an example of a configuration of a base station according to an embodiment.
FIG. 5 is a diagram illustrating an example of a configuration of a user terminal according to an embodiment.
FIG. 6 is a diagram illustrating an example of a hardware configuration of the base station and the user terminal according to an embodiment.

### Description of Embodiments

### <Traffic type>

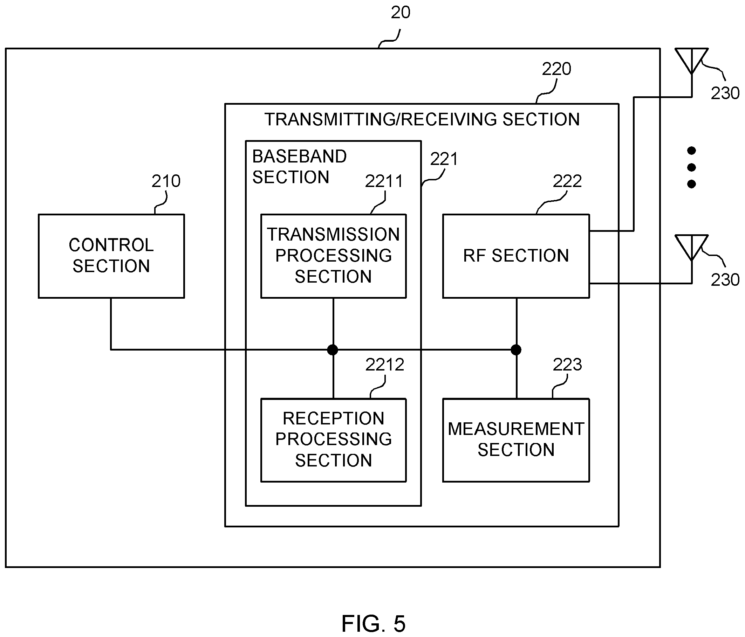

The invention made is disclosed in the embodiments referring to figure 5.

Future radio communication systems (for example, NR; are expected to involve traffic types (also referred to as services, service types, communication types, use cases, or the like) such as an enhanced mobile broadband (eMBB), machine type communications that embody multiple simultaneous connection (for example, massive machine type communications (mMTC), and Internet of Things (IoT)), and ultra-reliable and low-latency communications (URLLC). For example, it is required that the URLLC have smaller latency and higher reliability than the eMBB.

The traffic type may be identified in a physical layer on the basis of at least one of the following.
· Logical channels with different priorities
· Modulation and coding scheme (MCS) table (MCS index table)
· Channel quality indication (CQI) table · DCI format
· System information-radio network temporary identifier (RNTI) used for scrambling (masking) of cyclic redundancy check (CRC) bit included in (added to) the DCI

### (DCI format)

· Radio resource control (RRC) parameter
· Specific RNTI (for example, RNTI for URLLC, MCS-C-RNTI, or the like)
· Search Space
· Given field in DCI (for example, newly added field or reuse of existing field)

Specifically, a traffic type of the HARQ-ACK for a PDSCH may be determined on the basis of at least one of the following.
· MCS index table used to determine at least one of the modulation order, target code rate, and transport block size (TBS) of the PDSCH (for example, whether to use MCS index table 3)
· RNTI used for CRC scrambling of DCI used for scheduling the PDSCH (for example, whether CRC scrambled with C-RNTI or MCS-C-RNTI)

A traffic type of the SR may be determined on the basis of a higher layer parameter used as an SR identifier (SR-ID). The higher layer parameter may indicate whether the traffic type of the SR is eMBB or URLLC.

A traffic type of the CSI may be determined on the basis of configuration information related to CSI report (CSI report setting), a DCI type used for triggering, a DCI transmission parameter, or the like. The configuration information, the DCI type, or the like may indicate whether the traffic type of the CSI is eMBB or URLLC. The configuration information may be a higher layer parameter.

A traffic type of a physical uplink shared channel (PUSCH) may be determined on the basis of at least one of the following.
· MCS index table used to determine at least one of modulation order, target coding rate, and transport block size (TBS) of PUSCH (for example, whether or not to use MCS index table 3).
· RNTI used for CRC scrambling of DCI used for scheduling of PUSCH (for example, whether CRC scrambling is performed using C-RNTI or using MCS-C-RNTI)

The traffic type may be associated with communication requirements (requirements such as latency and error rate), a data type (voice, data, or the like), or the like.

URLLC requirements and eMBB requirements may be different in that the URLLC is lower in latency than the eMBB or the URLLC requirements include a reliability requirement.

For example, eMBB user (U)-plane latency requirements may include that downlink U-plane latency is 4 ms and that uplink U-plane latency is 4 ms. On the other hand, URLLC U-plane latency requirements may include that downlink U-plane latency is 0.5 ms and that uplink U-plane latency is 0.5 ms. Furthermore, the URLLC reliability requirements may include that a 32-byte error rate is 10⁻⁵ for a U-plane latency of 1 ms.

In contrast, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

### <Dynamic grant-based transmission and configured grant-based transmission (type 1, type 2)>

Dynamic grant-based transmission and configured grant-based transmission have been studied for UL transmission of NR.

Dynamic grant-based transmission is a method for performing UL transmission by using a Physical Uplink Shared Channel (PUSCH) on the basis of a dynamic UL grant (dynamic grant).

The configured grant-based transmission is a method of performing UL transmission using an uplink shared channel (for example, PUSCH) on the basis of the UL grant configured by the higher layer (for example, configured grant, may be referred to as configured UL grant or the like). In the configured grant-based transmission, a UL resource is already allocated to the UE, and the UE can voluntarily perform UL transmission by using a configured resource, and therefore, implementation of low latency communication can be expected.

The dynamic grant-based transmission may be referred to as a dynamic grant-based PUSCH, UL transmission with dynamic grant, PUSCH with dynamic grant, UL transmission with UL grant, UL grant-based transmission, UL transmission scheduled (for which a transmission resource is configured) by dynamic grant, and the like.

The configured grant-based transmission may be referred to as a configured grant-based PUSCH, UL transmission with configured grant, PUSCH with configured grant, UL transmission without UL grant, UL grant-free transmission, UL transmission scheduled (for which transmission resource is configured) by configured grant, and the like.

Furthermore, the configured grant-based transmission may be defined as one type of UL semi-persistent scheduling (SPS). In the present disclosure, "configured grant" may mutually be replaced with "SPS", "SPS/configured grant", and the like.

Several types (type 1, type 2, or the like) are being studied for configured grant-based transmission.

In configured grant type 1 transmission, the parameters used for configured grant-based transmission (which may also be referred to as configured grant-based transmission parameters, configured grant parameters, or the like) are configured in the UE using only higher layer signaling.

In configured grant type 2 transmission, a configured grant parameter is configured to the UE by higher layer signaling. In the configured grant type 2 transmission, notification of at least a part of the configured grant parameters may be provided to the UE by physical layer signaling (for example, activation downlink control information (DCI) described later).

Here, the higher layer signaling may be, for example, any of radio resource control (RRC) signaling, medium access control (MAC) signaling, broadcast information, and so on, or a combination thereof.

For example, a MAC control element (MAC CE), a MAC protocol data unit (PDU), or the like may be used for the MAC signaling. The broadcast information may be, for example, a Master Information Block (MIB), a System Information Block (SIB), Remaining Minimum System Information (RMSI), Other System Information (OSI), or the like.

The configured grant parameter may be configured in the UE using a ConfiguredGrantConfig information element of RRC. The configured grant parameters may include information specifying a configured grant resource, for example. The configured grant parameters may include information regarding, for example, an index of the configured grant, a time offset, periodicity, the number of repeated transmissions of a transport block (TB) (the number of repeated transmissions may be expressed as K), a Redundancy Version (RV) sequence used in the repeated transmissions, the above-described timer, and the like.

Here, the periodicity and the time offset each may be represented in units of symbols, slots, subframes, frames, or the like. The periodicity may be indicated by, for example, a given number of symbols. The time offset may be indicated by an offset with respect to a timing of a given index (such as slot number = 0 and/or system frame number = 0), for example. The number of repeated transmissions may be an arbitrary integer, for example, 1, 2, 4, 8, or the like. In a case where the number of repeated transmissions is n (> 0), the UE may perform configured grant-based PUSCH transmission of a given TB by using n times of transmission occasions.

The UE may determine that one or more configured grants have been triggered if the configured grant type 1 transmission is set. The UE may perform PUSCH transmission by using configured resource for configured grant-based transmission (which may also be referred to as a configured grant resource, a transmission occasion, or the like). Note that, even when the configured grant-based transmission is configured, the UE may skip the configured grant-based transmission when there is no data in the transmission buffer.

When the configured grant type 2 transmission is configured and notification of a given activation signal is provided, the UE may determine that one or more configured grants have been triggered (or activated). The given activation signal (DCI for activation) may be DCI (PDCCH) scrambled by a Cyclic Redundancy Check (CRC) with a given identifier (for example, Configured Scheduling RNTI (CS-RNTI)). Note that the DCI may be used for control such as deactivation and retransmission of the configured grant.

The UE may determine whether or not to perform PUSCH transmission by using the configured grant resource configured in the higher layer on the basis of the given activation signal described above. On the basis of the DCI for deactivating a configured grant or on the expiration (elapse of a given time) of a given timer, the UE may release (which may also be referred to as deactivate, or the like) a resource (PUSCH) corresponding to the configured grant.

Note that, even when the configured grant-based transmission is activated (in an active state), the UE may skip the configured grant-based transmission when there is no data in the transmission buffer.

Note that, each of the dynamic grant and the configured grant may be referred to as an actual UL grant. That is, the actual UL grant may be higher layer signaling (for example, ConfiguredGrantConfig information element of RRC), physical layer signaling (for example, the above-described given activation signal), or a combination thereof.

By the way, a multi configured grant may be set in one cell in the UE, and the UE may be in a state where the multi configured grant is triggered (or activated) in a given period.

However, when a multi configured grant is set, triggered, or activated, which configured grant the UE uses for UL transmission has not been studied yet. There is a problem that, if it is not specified that the configured grant-based transmission is performed at an appropriate transmission occasion, the communication throughput decreases.

Therefore, the inventors of the present invention have conceived of a method of performing configured grant-based transmission at an appropriate transmission occasion even when a multi configured grant is configured.

Hereinafter, embodiments according to the present disclosure will be described in detail with reference to the drawings. Radio communication methods according to the respective embodiments may be applied independently, or may be applied in combination.

Hereinafter, "configured grant" may be read as "configuration of configured grants". "Determining a configured grant for performing configured grant-based transmission" may be simply referred to as "selecting a configured grant". Furthermore, "traffic", "data", "UL data", "PUSCH", and "transport block" may be replaced with each other.

### <DCI format>

As described above, it is assumed in the NR that communication supporting a plurality of services (also referred to as use cases, traffic types, and the like) having different requirements is performed in the same cell.

Thus, in the NR, it is considered to introduce a new DCI format separately from existing DCI formats (for example, DCI formats 1_0, 1_1, 0_0, 0_1, 2_0, 2_1, 2_2, and 2_3). The new DCI format may be used for scheduling the PUSCH or the PDSCH, for example.

Here, the new DCI format to be used for scheduling the PDSCH is also referred to as a DCI format 1_2, or the like. The new DCI format to be used for scheduling the PUSCH may be referred to as a DCI format 0_2, or the like. These new DCI formats may be utilized for scheduling the PDSCH or the PUSCH supporting specific traffic types or requirements (for example, URLLC, or the like).

The name of the new DCI format is not limited thereto. For example, the name of the new DCI format for scheduling the PDSCH and the PUSCH may be obtained by replacing "2" of the DCI format 1_2 and the DCI format 0_2 with an arbitrary character string other than "0" and "1" or may be another name. In addition, the name of the new DCI format for the uplink pre-emption may be obtained by replacing "4" of the DCI format 2_4 with any character string other than "0", "1", "2", and "3" or may be another name.

Furthermore, in a case where the new DCI format is supported, it is assumed that a higher layer parameter related to the DCI format is also configured. For example, it is conceivable that one or more higher layer parameters related to the new DCI format to be used for scheduling the PUSCH (for example, dynamic grant-based PUSCH) are configured in the configuration information (for example, PUSCHConfig) of the PUSCH.

It is also conceivable that the new DCI format (for example, DCI format 0_2) is used for a configured grant-based transmission instruction (for example, activation/deactivation). For example, the base station may instruct the UE to perform the type 2 configured grant-based activation by using the DCI format 0_2.

In such a case, how to configure the configuration information (for example, ConfiguredGrantConfig) to be used for the configured grant-based configuration becomes a problem. For example, how to configure the higher layer parameters, and the like, to be included in the type 1 and type 2 configured grant-based configuration information becomes a problem.

The inventors of the present invention therefore have studied higher layer parameters to be configured in the configured grant-based configuration information and have conceived the present embodiment. According to an aspect of the present invention, even in a case where newly supported downlink control information is used for an instruction of configured grant-based activation, an appropriate higher layer parameter can be configured in the configured grant-based configuration information.

Hereinafter, embodiments according to the present disclosure will be described in detail with reference to the drawings. The respective aspects may be applied independently or may be applied in combination.

In the following description, the DCI format 0_2 to be used for scheduling the PUSCH will be described as an example of the new DCI format, but the DCI format is not limited thereto. Further, the DCI format 0_2 may be at least one of a configuration having a size smaller than that of the existing DCI format (for example, at least one of DCI formats 0_0 and 0_1) and a configuration in which granularity of resource allocation is fine.

In addition, the embodiment described below can be applied not only to the higher layer parameter related to the new DCI format but also to the higher layer parameter not related to the new DCI format.

### (First Aspect)

In a first aspect, configuration of a higher layer parameter that is newly configured for a configured grant-based PUSCH and application of the UE will be described. Note that, in the following description, the newly configured higher layer parameter (hereinafter, also referred to as a new higher layer parameter) may be read as a higher layer parameter related to the new DCI format, a higher layer parameter not supported by Rel. 15 but supported by Rel. 16 (or after Rel. 16), or a higher layer parameter supported by a dynamic grant scheduled in the new DCI format.

The new higher layer parameter may be separately configured for each type of configured grant-based PUSCH transmission. For example, at least one of content and the number of new higher layer parameters configured in the type 1 configured grant-based PUSCH and the type 2 configured grant-based PUSCH may be different.

### <Type 1 Configured Grant Base>

The new higher layer parameter may be configured for each type 1 configured grant-based PUSCH transmission. In other words, in a case where a plurality of type 1 configured grant-based PUSCH transmissions are configured in the UE, whether or not to apply the new higher layer parameter may be configured for each PUSCH transmission.

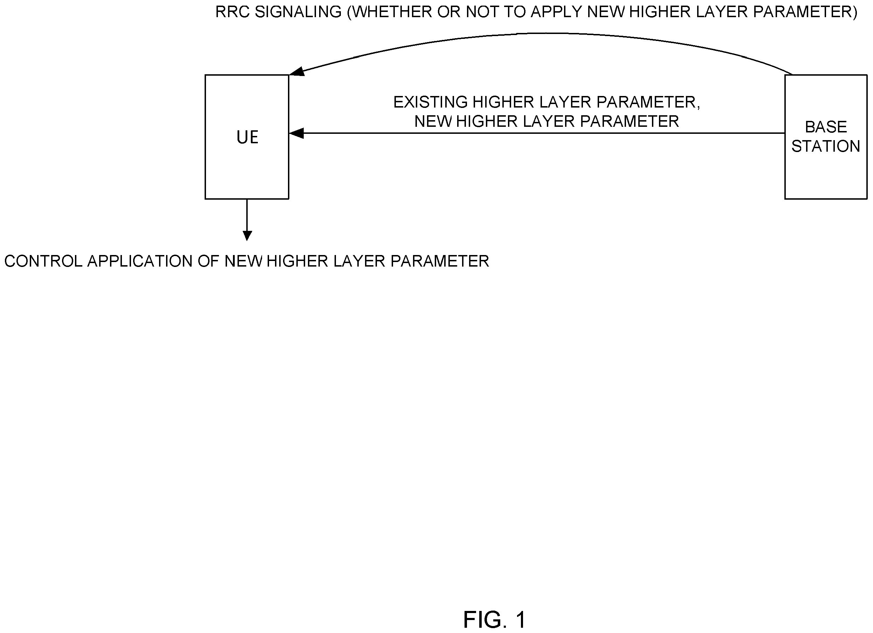

Whether or not the UE performs an operation (behavior) to which the new higher layer parameter is applied may be configured from a network (for example, a base station) to the UE. For example, the base station may notify the UE as to whether or not to perform an operation to which the new higher layer parameter is applied by using the higher layer parameter (for example, PUSCHtransmissionschemeindicator-ForType1Configuredgrant, or PUSCHtransmissionschemeindicator) (see FIG. 1).

FIG. 1 illustrates an example of a case where the UE controls application of the new higher layer parameter on the basis of the information as to whether or not to apply the new higher layer parameter notification of which is provided from the base station. The information regarding whether or not to apply the new higher layer parameter may be included in the configuration information in which notification of the new higher layer parameter is provided, or the UE may be notified separately from the new higher layer parameter.

The operation to which the new higher layer parameter is applied may be referred to as a Rel. 16 PUSCH transmission scheme (Rel-16 PUSCH transmission scheme) or a second operation. The operation to which the new higher layer parameter is not applied may be referred to as a Rel. 15 PUSCH transmission scheme (Rel-15 PUSCH transmission scheme) or a first operation.

In a case where a notification of application of the second operation (for example, the Rel. 16 PUSCH transmission scheme) is made by the notification (for example, PUSCHtransmissionschemeindicator) from the base station, the UE may control the communication using the new higher layer parameter. In a case where the second operation is applied, the UE may apply a second higher layer parameter (for example, a new higher layer parameter) in addition to a first higher layer parameter (for example, an existing higher layer parameter).

Alternatively, the UE may override or update at least a part of the existing higher layer parameter with a new higher layer parameter. The new higher layer parameter may be, for example, at least one of a higher layer parameter (for example, frequencyHopping) related to frequency hopping, a higher layer parameter (for example, RepK) related to the number of repetitions, and a higher layer parameter (for example, timeDomainAllocation) related to time domain allocation. Of course, the new higher layer parameter is not limited thereto.

As described above, even in a case where the configured grant of type 1 supports the new higher layer parameter, the UE may control whether or not to apply the operation using the new higher layer parameter on the basis of the notification from the base station. As a result, in a case where one or more type 1 configured grant-based PUSCH transmissions are configured for the UE, it is possible to flexibly control the operation of each PUSCH transmission.

### <Type 2 Configured Grant Base>

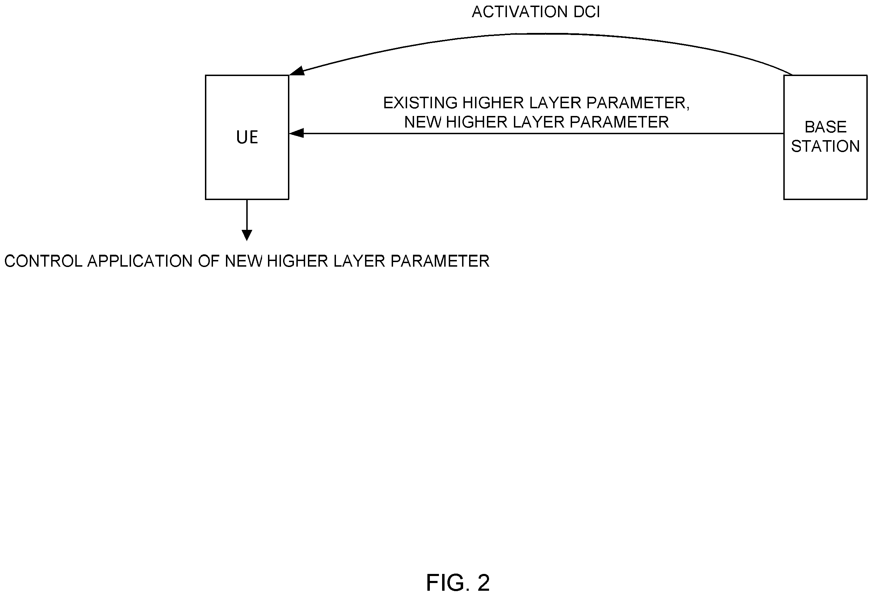

At least one of activation and deactivation (activation/deactivation) is controlled by the DCI in the type 2 configured grant-based PUSCH transmission. The UE may control whether or not to perform an operation to which the new higher layer parameter is applied on the basis of the type of the DCI (for example, the DCI format) that gives an instruction of activation of the type 2 configured grant-based PUSCH transmission (see FIG. 2).

FIG. 2 illustrates an example of a case where the UE controls application of the new higher layer parameter on the basis of the DCI (for example, the DCI format) that gives an instruction of activation of the type 2 configured grant-based PUSCH transmission.

The UE may apply the Rel-15 PUSCH transmission scheme or the first operation in a case where an instruction of the activation is given in the first DCI format (for example, the DCI format 0_0) . For example, the UE controls communication using the existing higher layer parameter (for example, the higher layer parameter supported in Rel. 15).

In a case where an instruction of activation is given in the second DCI format (for example, the DCI format 0_1), the UE may apply the Rel. 15 PUSCH transmission scheme (or the first operation) except for a given higher layer parameter. The given higher layer parameter may be part of the new higher layer parameter.

For example, the given higher layer parameter may be at least one of a higher layer parameter related to a time domain resource allocation list of the PUSCH and a higher layer parameter (for example, P0-PUSCH-Set) related to a power offset of the PUSCH.

In a case where a higher layer parameter (for example, PUSCH-TimeDomainResourceAllocationList-ForDCIformat 0_1) related to the time domain resource allocation list is configured, the UE may determine a time domain resource on the basis of an entry (or a time domain resource allocation candidate) specified by the higher layer parameter. In such a case, the number of repetitions specified in the DCI may be applied, and the number of repetitions configured in the higher layer may be ignored.

On the other hand, in a case where the higher layer parameter (for example, PUSCH-TimeDomainResourceAllocationList-ForDCIformat 0_1) related to the time domain resource allocation list is not configured, the existing higher layer parameter (for example, pusch-TimeDomainAllocationList for dynamic grant) and the number of repetitions configured in the higher layer may be applied to determine the time domain resource.

The UE may apply the Rel-16 PUSCH transmission scheme or the second operation in a case where an instruction of the activation is given in the third DCI format (for example, the DCI format 0_2). For example, the UE controls communication using a new higher layer parameter (for example, the higher layer parameter supported in Rel. 16).

In a case where the second operation is applied, the UE may apply a second higher layer parameter (for example, a new higher layer parameter) in addition to a first higher layer parameter (for example, an existing higher layer parameter). Alternatively, the UE may override or update at least a part of the existing higher layer parameter with a new higher layer parameter.

As described above, even in a case where the configured grant of type 2 supports the new higher layer parameter, the UE may control whether or not to apply the operation using the new higher layer parameter on the basis of the notification from the base station (for example, the DCI that gives an instruction of activation). As a result, it is possible to flexibly control the operation of PUSCH transmission of the configuration grant of type 2.

### (Second Aspect)

In a second aspect, an example of a higher layer parameter newly configured for a configured grant-based PUSCH will be described. Note that some or all of the new higher layer parameters described in the second aspect may be applied in the first aspect described above. Further, the new higher layer parameter is not limited to the following higher layer parameter.

### <Resource Allocation Granularity>

At least one of the type 1 configured grant-based PUSCH and the type 2 configured grant-based PUSCH may support the new higher layer parameter (for example, ResourceAllocationType1-granularity-ForDCIFormat 0_2) related to resource allocation granularity.

The higher layer parameter related to the resource allocation granularity may be a higher layer parameter related to the allocation of a frequency domain (for example, the granularity of the allocation) for the resource allocation type 1 (resource allocation type 1) corresponding to the new DCI format.

The base station may configure, in the UE, a given value (for example, {2, 4, 8, 16}) as a higher layer parameter as a value of scheduling granularity for giving an instruction of a starting position (for example, a starting point) and a length (for example, a length) of the PUSCH allocation. Note that the value that can be configured in the higher layer is not limited thereto.

By making the value of the allocation granularity (or the number of candidates) of the new DCI format (for example, the DCI format 0_2) smaller than the existing DCI format (for example, the DCI formats 0_0 and 0_1), the size of the DCI format can be reduced. In a case where such a higher layer parameter is not configured, the UE may apply a given value (for example, 1 PRB) as the granularity of a frequency.

For the configuration information of the type 1 configured grant-based PUSCH, the new higher layer parameter related to the resource allocation granularity does not have to be introduced or supported. One of the purposes of configuring the new higher layer parameter related to the resource allocation granularity is to reduce an overhead of the DCI, but this is because transmission of the type 1 configured grant-based PUSCH is configured without using the DCI.

In the configuration information of the type 1 configured grant-based PUSCH, the following higher layer parameters (for example, existing higher layer parameters) may be configured as the higher layer parameters related to the resource allocation granularity:
· higher layer parameter (for example, resourceAllocation) regarding the resource allocation type
· higher layer parameter (rbg-Size) regarding a resource block group (RBG) size
· higher layer parameter regarding allocation of a frequency domain (for example, frequencyDomainAllocation)

The UE may use the existing higher layer parameter for the resource allocation of the type 1 configured grant-based PUSCH even in a case where the base station gives an instruction to apply a new higher layer parameter. In this case, the UE may select one of the resource allocation type 0 or the resource allocation type 1 as the resource allocation type.

For the configuration information of the type 2 configured grant-based PUSCH, the new higher layer parameter related to the resource allocation granularity may be introduced or supported. For example, the UE may apply at least one of the following option 1-1 or 1-2:

### [Option 1-1]

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter (for example, resourceAllocation, rbg-Size, or the like).

The UE may apply the second operation (for example, the Rel. 16 PUSCH transmission scheme) in a case where PUSCH transmission is activated in the new DCI format (for example, the DCI format 0_2). For example, the configuration of the higher layer parameter of the configured grant of type 2 may follow a dynamic grant-based RRC configuration (DG RRC configuration).

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

In other words, the UE may apply the new higher layer parameter without applying the given higher layer parameter (for example, resourceAllocation, rbg-Size, or the like) among the existing higher layer parameters, for the resource allocation granularity. Not applying the higher layer parameter may mean ignoring the higher layer parameter in a case of activation in the DCI format 0_2 and applying the higher layer parameter in a case of activation in another DCI format 0_0 or 0_1.

### [Option 1-2]

In Option 1-2, the UE applies the first operation (for example, the Rel. 15 PUSCH transmission scheme) in a case where PUSCH transmission is activated in the existing specific DCI format (for example, the DCI format 0_0).

On the other hand, the UE may apply the second operation (for example, the Rel. 16 PUSCH transmission scheme) in a case where PUSCH transmission is activated in another existing DCI format (for example, the DCI format 0_1) or in the new DCI format (for example, the DCI format 0_2).

### <Initialization of Demodulation Reference Signal Sequence>

At least one of the type 1 configured grant-based PUSCH and the type 2 configured grant-based PUSCH may support the new higher layer parameter (for example, DMRSsequenceinitialization-ForDCIFormat0_2) related to initialization of the demodulation reference signal sequence.

The higher layer parameter related to the initialization of the demodulation reference signal sequence may be a higher layer parameter that configures or makes a notification as to whether or not notification information (or a notification field) related to the initialization of the demodulation reference signal sequence is included in the DCI.

For the configuration information of the type 1 configured grant-based PUSCH, a new higher layer parameter related to the initialization of the demodulation reference signal sequence does not have to be introduced or supported.

In the configuration information of the type 1 configured grant-based PUSCH, the following higher layer parameters (for example, existing higher layer parameters) may be configured as the higher layer parameters related to the initialization of the demodulation reference signal sequence:
· higher layer parameter related to initialization of DMRS sequence (for example, dmrs-SeqInitialization)

The UE may use the existing higher layer parameter for the resource allocation of the type 1 configured grant-based PUSCH even in a case where the base station gives an instruction to apply a new higher layer parameter.

For the configuration information of the type 2 configured grant-based PUSCH, the new higher layer parameter related to the initialization of the demodulation reference signal sequence may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter.

The UE may apply the second operation (for example, the Rel. 16 PUSCH transmission scheme) in a case where PUSCH transmission is activated in the new DCI format (for example, the DCI format 0_2). For example, the configuration of the higher layer parameter of the configured grant of type 2 may follow the higher layer parameter (DMRSsequenceinitialization-ForDCIFormat 0_2) in the dynamic grant-based configuration.

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

### <Size of Beta Offset Notification Information>

At least one of the type 1 configured grant-based PUSCH and the type 2 configured grant-based PUSCH may support the new higher layer parameter (for example, dynamic-ForDCIFormat 0_2) related to a size of beta offset notification information in the UCI on PUSCH.

The higher layer parameter related to configuration of the beta offset may be a higher layer parameter that configures or makes a notification of the size of the notification information in a case where the beta offset is dynamically configured. In other words, in a case where a notification method of the beta offset is a dynamic notification method, the size of the notification field included in the DCI may be configured with the new higher layer parameter.

For example, in a case where a notification method of the beta offset notification is a dynamic notification method, the base station may notify the UE of the size (for example, the number of bits) of the beta offset notification field included in the new DCI format by using new higher layer signaling. The size of the notification field may be selected from, for example, 0, 1, or 2 bits.

By making the size of the beta offset notification field of the new DCI format (for example, the DCI format 0_2) smaller than the existing DCI format (for example, the DCI formats 0_0 and 0_1), the size of the DCI format can be reduced.

For the configuration information of the type 1 configured grant-based PUSCH, the new higher layer parameter related to the configuration of the beta offset does not have to be introduced or supported. This is because transmission of the type 1 configured grant-based PUSCH is configured without using the DCI, and thus, information that makes a notification of the size of the beta offset notification field included in the DCI is not required for the type 1 configured grant-based PUSCH.

For the configuration information of the type 2 configured grant-based PUSCH, the higher layer parameter related to the configuration of the beta offset may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter.

The UE may apply the second operation (for example, the Rel. 16 PUSCH transmission scheme) in a case where PUSCH transmission is activated in the new DCI format (for example, the DCI format 0_2) . For example, the configuration of the higher layer parameter of the configured grant of type 2 may follow the higher layer parameter (dynamic-ForDCIFormat 0_2) in the dynamic grant-based configuration.

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

### <UCI on PUSCH list>

At least one of the type 1 configured grant-based PUSCH and the type 2 configured grant-based PUSCH may support the new higher layer parameter (for example, UCI-OnPUSCH-List) related to a UCI on PUSCH list.

The higher layer parameter related to the UCI on PUSCH list may be a higher layer parameter related to UCI on PUSCH configuration (for example, the notification method of the beta offset, and the like). For example, in a case where at least two HARQ-ACK codebooks are simultaneously configured to support different service types, the configuration of the UCI on PUSCH may also be separately configured for each PUSCH transmission.

In this case, the beta offset notification may be set dynamically for the first PUSCH transmission, and the beta offset notification may be set semi-statically for the second PUSCH transmission.

For the configuration information of the type 1 configured grant-based PUSCH, the new higher layer parameter related to the UCI on PUSCH list does not have to be introduced or supported. In this case, for the type 1 configured grant-based PUSCH, the notification method of the beta offset may always be configured semi-statically.

The UE may use the existing higher layer parameter for the UCI on PUSCH list of the type 1 configured grant-based PUSCH even in a case where the base station gives an instruction to apply a new higher layer parameter. Note that in this case, a new value (for example, 0) may be applied as a value of the beta offset.

For the configuration information of the type 2 configured grant-based PUSCH, the new higher layer parameter related to the UCI on PUSCH list may be introduced or supported. For example, the UE may apply at least one of the following option 2-1 or 2-2.

### [Option 2-1]

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter (for example, CG-UCI-OnPUSCH, or the like). Note that the UE may apply a new value (for example, 0) as the value of the beta offset.

The UE may apply the second operation (for example, the Rel. 16 PUSCH transmission scheme) in a case where PUSCH transmission is activated in the new DCI format (for example, the DCI format 0_2). For example, the configuration of the higher layer parameter of the configured grant of type 2 may follow a dynamic grant-based RRC configuration (UCI OnPUSCH-List for DG).

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

### [Option 2-2]

In Option 2-2, the UE applies the first operation (for example, the Rel. 15 PUSCH transmission scheme) in a case where PUSCH transmission is activated in the existing specific DCI format (for example, the DCI format 0_0).

On the other hand, the UE may apply the second operation (for example, the Rel. 16 PUSCH transmission scheme) in a case where PUSCH transmission is activated in another existing DCI format (for example, the DCI format 0_1) or in the new DCI format (for example, the DCI format 0_2).

Note that in the second operation (for example, the Rel. 16 PUSCH transmission scheme), two sets of the UCI on PUSCH list may be configured. Among them, one set (for example, set #0) may be a beta offset (for example, low Betaoffset(s)) considering the PUSCH, and the other set (for example, set #1) may be a beta offset (for example, high Betaoffset(s)) considering the UCI on PUSCH.

In addition, information regarding a priority may be included in a DL DCI (for example, a DL assignment) and a UL DCI (for example, a UL grant). The priority included in the DL DCI (for example, the DCI format 1_1 or 1_2) may be a priority of the HARQ-ACK codebook. The priority included in the UL DCI (for example, the DCI format 0_1 or 0_2) may be a priority of the PUSCH.

Note that the priority is configured in a plurality of levels (for example, two levels of Low and High), and in a case where signals (or channels) having different priorities collide, a signal having a higher priority may be transmitted, and a signal having a lower priority may be dropped.

For example, in a case where the priority of the DL DCI is higher than the priority of the UL DCI (DL DCI > UL DCI), the UE may perform control to drop the PUSCH and transmit the PUCCH. On the other hand, in a case where the priority of the UL DCI is higher than the priority of the DL DCI (UL DCI > DL DCI), the UE may perform control to drop the UCI and not to multiplex the UCI with the PUSCH.

In a case where the priority of the DL DCI and the priority of the UL DCI are the same (DL DCI = UL DCI and both priorities are High), the UE may apply the UCI on PUSCH list of the set #1 (for example, the beta offset). Alternatively, in a case where the priority of the DL DCI and the priority of the UL DCI are the same (DL DCI = UL DCI and both priorities are Low), the UE may apply the UCI on PUSCH list of the set #0 (for example, the beta offset).

### <Frequency hopping>

At least one of the type 1 configured grant-based PUSCH and the type 2 configured grant-based PUSCH may support the new higher layer parameter (for example, frequencyHopping-ForDCIFormat0_2) related to the frequency hopping.

The higher layer parameter related to the frequency hopping may be a higher layer parameter that gives a notification of or configures the type of the frequency hopping. For example, the base station configures, by higher layer signaling, a type of the frequency hopping to be applied to the PUSCH, to the UE.

For the configuration information of the type 1 configured grant-based PUSCH, the new higher layer parameter related to frequency hopping may be introduced or supported. The new higher layer parameter related to the frequency hopping may specify at least one of inter-PUSCH (interPUSCH), inter-slot (interSlot), and intra-slot (intraslot) .

In a case where the UE is instructed to apply the new higher layer parameter from the base station by higher layer signaling (for example, PUSCHtransmissionschemeindicatror), the UE may determine the type of the frequency hopping to be applied on the basis of the new higher layer parameter included in the configuration information of the configured grant of type 1.

On the other hand, in a case where the UE is not instructed to apply the new higher layer parameter, the UE may determine the type of the frequency hopping to be applied on the basis of the existing higher layer parameter related to the frequency hopping. The existing higher layer parameter related to the frequency hopping may specify at least one of inter-slot (interSlot) and intra-slot (intraslot).

For the configuration information of the type 2 configured grant-based PUSCH, the new higher layer parameter related to the frequency hopping may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter to determine the frequency hopping to be applied to the PUSCH.

The UE may apply the second operation (for example, the Rel. 16 PUSCH transmission scheme) in a case where PUSCH transmission is activated in the new DCI format (for example, the DCI format 0_2) . For example, the configuration of the higher layer parameter of the configured grant of type 2 may follow the higher layer parameter (dynamic-ForDCIFormat 0_2) in the dynamic grant-based configuration.

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

### <Frequency hopping offset list>

At least one of the type 1 configured grant-based PUSCH and the type 2 configured grant-based PUSCH may support the new higher layer parameter (for example, frequencyHoppingOffsetLists-ForDCIFormat0_2) related to the frequency hopping offset list.

The higher layer parameter related to the frequency hopping offset list may be a higher layer parameter that makes a notification of or configures an offset (for example, at least one of a frequency offset and a time offset) of the frequency hopping. For example, the base station configures, by higher layer signaling, an offset of the frequency hopping to be applied to the PUSCH, to the UE.

The new higher layer parameter related to the frequency hopping offset may make a notification of a different value from the existing higher layer parameter related to the frequency hopping offset (for example, frequencyHoppingOffset included in rrc-ConfiguredUplinkGrant) .

For the configuration information of the type 1 configured grant-based PUSCH, the new higher layer parameter related to the frequency hopping offset does not have to be introduced or supported.

In this case, even in a case where the UE is instructed to apply the new higher layer parameter from the base station, the existing higher layer parameter related to the frequency hopping offset may be applied to the type 1 configured grant-based PUSCH. The existing higher layer parameter related to the frequency hopping offset may include information related to a range in a frequency direction (for example, a physical resource block).

For the configuration information of the type 2 configured grant-based PUSCH, the new higher layer parameter related to the frequency hopping offset may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter to determine the frequency hopping offset to be applied to the PUSCH.

The UE may apply the second operation (for example, the Rel. 16 PUSCH transmission scheme) in a case where PUSCH transmission is activated in the new DCI format (for example, the DCI format 0_2) . For example, the configuration of the higher layer parameter of the configured grant of type 2 may follow the higher layer parameter (dynamic-ForDCIFormat 0_2) in the dynamic grant-based configuration.

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

### <PUSCH time domain resource allocation list>

In at least one of the type 1 configured grant-based PUSCH and the type 2 configured grant-based PUSCH, the new higher layer parameter (for example, at least one of PUSCH-TimeDomainResourceAllocationList-ForDCIFormat 0_2 and PUSCH-TimeDomainResourceAllocationList-ForDCIFormat 0_1) related to a time domain resource allocation list of a PUSCH scheduled in the new DCI format may be supported.

The higher layer parameter related to the time domain resource allocation list of the PUSCH may be the higher layer parameter that gives a notification of or configures the resource allocation of the time domain of the PUSCH. For example, in a case where the base station gives a notification of the time resource allocation of the PUSCH by using the time resource allocation field included in the DCI, a time domain resource candidate corresponding to each bit of the field may be provided in notification or configured by using the higher layer parameter.

The information (time resource allocation candidate) related to the time domain resource allocation configured in the higher layer may include information (SLIV) related to the starting position and the length of the PUSCH and information related to the number of repetitions. In addition, a correspondence relationship between each bit and the time domain resource allocation candidate may be defined by a given table (for example, also referred to as a TDRA table).

The TDRA table (also referred to as a new TDRA table) in which the time domain resource allocation candidate notification of which is provided by the new higher layer parameter is defined may have a configuration in which information regarding the number of repetitions is added to an existing (for example, Rel. 15) TDRA table. For example, a column defining the number of repetitions may be added to the existing TDRA table. The number of time domain resource allocation candidates (or a size of the new TDRA table) that can be configured in the new TDRA table may be a greater value (for example, 64) than that in the existing TDRA table.

In the time domain resource allocation of the type 1 configured grant-based PUSCH, in a case where the UE is instructed to apply the new higher layer parameter (or the Rel. 16 PUSCH transmission scheme) from the base station, the UE may determine the time resource allocation of the PUSCH by using the existing higher layer parameter. For example, the UE may utilize the existing higher layer parameters (for example, timeDomainOffset, timeDomainAllocation) for the time domain resource.

In this case, timeDomainAllocation may specify one entry (time domain resource allocation candidate) of a table configured with the higher layer parameter (for example, PUSCH-TimeDomainResourceAllocationList-ForDCIformat 0_2) for the dynamic grant-based PUSCH. For example, timeDomainAllocation may notify the UE of one entry from 64 entries (or candidates). The 64 entries may be defined in the specifications in advance or may be configured in dynamic grant-based higher layer signaling.

The UE may determine the time domain resource to be used for the PUSCH transmission on the basis of the given entry notification of which is provided. Note that, in a case where the given entry defined in the table includes the information regarding the number of repetitions, the UE may apply one of the number of repetitions included in the given entry and the number of repetitions notification of which is provided by the existing higher layer signaling regarding the number of repetitions.

Specifically, the UE may ignore the information regarding the number of repetitions notification of which is provided in the given entry and may apply the number of repetitions notification of which is provided by existing higher layer signaling. Alternatively, the UE may apply the information regarding the number of repetitions notification of which is provided in the given entry. In this case, notification of the information regarding the number of repetitions may not be provided by the higher layer signaling, or the UE may ignore the information regarding the number of repetitions notification of which is provided by the higher layer signaling.

In a case where the UE is instructed to apply the existing higher layer parameter (or the Rel. 15 PUSCH transmission scheme) from the base station, the UE may use the information (for example, timeDomainOffset, timeDomainAllocation, repK) related to the time domain resource included in the existing higher layer parameter.

In this case, timeDomainAllocation may specify one entry (time domain resource allocation candidate) of a table configured with the existing higher layer parameter for the dynamic grant-based PUSCH. Here, timeDomainAllocation may notify the UE of one entry from 16 entries (or candidates).

For the configuration information of the type 2 configured grant-based PUSCH, a new higher layer parameter related to the time domain resource allocation list may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter (for example, a dynamic grant-based PUSCH time domain allocation list (TimeDomainAllocationList) and RepK) to determine the time domain resource allocation of the PUSCH.

The UE may apply the second operation (for example, the Rel. 16 PUSCH transmission scheme) in a case where PUSCH transmission is activated in the new DCI format (for example, the DCI format 0_2). In this case, the UE may apply a new higher layer parameter (for example, TimeDomainResouceAllocationList-ForDCI format0_2) to determine the time domain resource allocation of the PUSCH. Note that the UE may apply the number of repetitions included in the given entry specified in the DCI and ignore the number of repetitions notification of which is provided by the higher layer signaling.

Further, PUSCH transmission may be activated in the DCI format 0_1, and the higher layer parameter (for example, TimeDomainResouceAllocationList-ForDCIformat0_1) of the time domain resource allocation list corresponding to the DCI format 0_1 may be configured. In this case, the UE may apply TimeDomainResouceAllocationList-ForDCIformat0_1 to determine the time domain resource allocation of the PUSCH. Note that the UE may apply the number of repetitions included in the given entry specified in the DCI and ignore the number of repetitions notification of which is provided by the higher layer signaling.

The higher layer parameter (for example, TimeDomainResouceAllocationList-ForDCIformat0_1) of the time domain resource allocation list corresponding to the DCI format 0_1 does not have to be configured. In a case where the PUSCH transmission is activated in the DCI format 0_1, the UE may determine the time domain resource allocation of the PUSCH on the basis of the existing higher layer parameter (for example, pusch-TimeDomainAllocationList for dynamic grant) and the number of repetitions configured in the higher layer.

### <Redundancy version>

At least one of the type 1 configured grant-based PUSCH and the type 2 configured grant-based PUSCH may support the new higher layer parameter (for example, repK-RV) related to the redundancy version.

The higher layer parameter related to the redundancy version may be a higher layer parameter that gives a notification of or configures the redundancy version applied to the repeated transmissions. For example, the base station configures, by higher layer signaling, the redundancy version applied to the repeated transmissions of the PUSCH, to the UE.

For the configuration information of the type 1 configured grant-based PUSCH, the new higher layer parameter related to the redundancy version does not have to be introduced or supported. Even in a case where the UE is instructed to apply the new higher layer parameter from the base station, the UE may determine the redundancy version to be applied using the existing higher layer parameter.

For the configuration information of the type 2 configured grant-based PUSCH, the new higher layer parameter related to the redundancy version does not have to be introduced or supported. Even in a case where the UE is activated in the new DCI format, the UE may determine the redundancy version to be applied using the existing higher layer parameter.

Alternatively, the UE may apply the redundancy version configured in a dynamic grant base in a case where the UE is activated in a new DCI format.

### <Transmission power offset>

At least one of the type 1 configured grant-based PUSCH and the type 2 configured grant-based PUSCH may support the new higher layer parameter (for example, P0-PUSCH-Set) related to a transmission power offset of PUSCH.

The higher layer parameter related to a transmission power offset of the PUSCH may be a higher layer parameter that gives a notification of or configures the offset (or an offset candidate) of the transmission power. For example, the base station configures a given offset value of transmission power of the PUSCH for the UE by the higher layer signaling.

For the configuration information of the type 1 configured grant-based PUSCH, the new higher layer parameter related to the transmission power offset does not have to be introduced or supported. Even in a case where the UE is instructed to apply the new higher layer parameter from the base station, the UE may determine the transmission power offset to be applied using the existing higher layer parameter (for example, p0-PUSCH-Alpha). Note that, in such a case, the value or the range of the transmission power offset configured by the higher layer parameter may be changed from that of the existing system.

For the configuration information of the type 2 configured grant-based PUSCH, the new higher layer parameter related to the frequency hopping offset may be introduced or supported.

The UE may determine the higher layer parameter to be applied on the basis of the DCI (for example, the DCI format) that gives an instruction of activation of PUSCH transmission.

The UE may apply the first operation (for example, the Rel. 15 PUSCH transmission scheme) in a case where PUSCH transmission is activated in the existing DCI format (for example, the DCI format 0_0 or the DCI format 0_1). In this case, the UE may apply the existing higher layer parameter to determine the transmission power offset of the PUSCH.

The UE may apply the second operation (for example, the Rel. 16 PUSCH transmission scheme) in a case where PUSCH transmission is activated in the new DCI format (for example, the DCI format 0_2). For example, the configuration of the higher layer parameter of the configured grant of type 2 may follow the higher layer parameter in the dynamic grant-based configuration.

In this case, the new higher layer parameter configured for the dynamic grant-based PUSCH (for example, a dynamic grant-based PUSCH scheduled in the new DCI format) may also be configured for the type 2 configured grant-based PUSCH. Alternatively, the UE may apply the higher layer parameter included in the configuration information configured for the dynamic grant-based PUSCH to the configured grant-based PUSCH.

Alternatively, in a case where the PUSCH transmission is activated in the existing given DCI format (for example, DCI format 0_1) and the new higher layer parameter (for example, P0-PUSCH-Set) is configured, the UE may apply the second operation (for example, the Rel. 16 PUSCH transmission scheme). On the other hand, in a case where the PUSCH transmission is activated in the existing given DCI format (for example, DCI format 0_1) and no new higher layer parameter (for example, P0-PUSCH-Set) is configured, the UE may apply the first operation (for example, the Rel. 15 PUSCH transmission scheme).

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

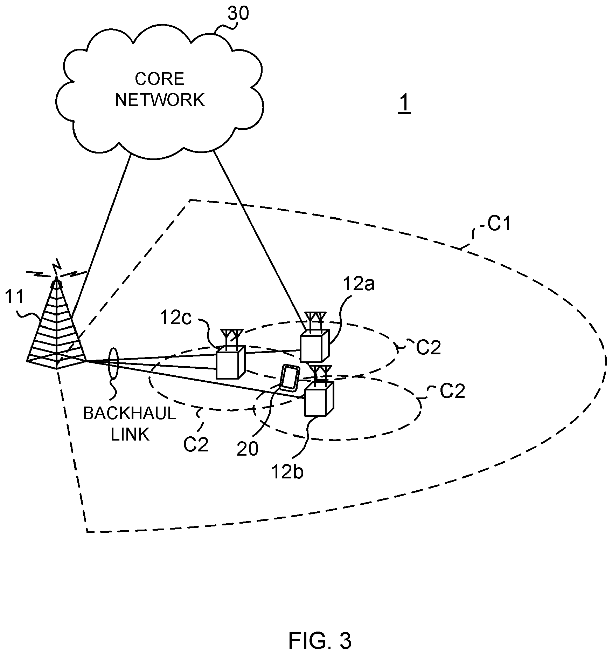

FIG. 3 is a diagram illustrating an example of a schematic configuration of a radio communication system according to an embodiment. A radio communication system 1 may be a system that implements communication using long term evolution (LTE), 5th generation mobile communication system New Radio (5G NR), and the like drafted as the specification by third generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

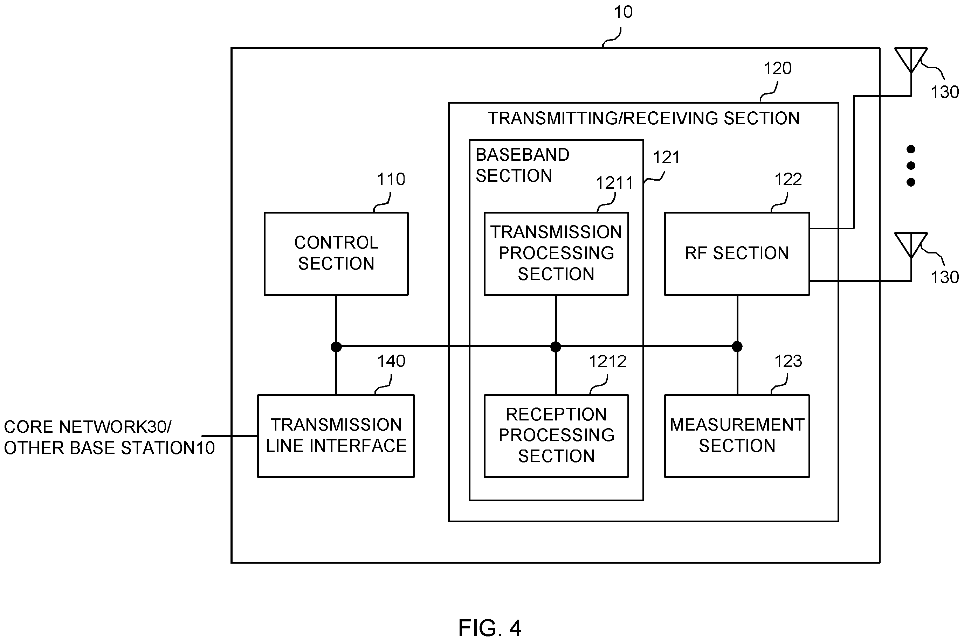

FIG. 4 is a diagram illustrating an example of a configuration of a base station according to an embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna, which is described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, and the transmission line interface 140.

The transmitting/receiving section 120 may transmit first information including one or more higher layer parameters for a first-type configured grant-based uplink shared channel. In addition, the transmitting/receiving section 120 may transmit second information including one or more higher layer parameters for a second-type configured grant-based uplink shared channel. In addition, the transmitting/receiving section 120 may transmit third information including one or more higher layer parameters for a dynamic grant-based uplink shared channel.

The control section 110 may control notification of the higher layer parameter to be applied by the UE.

### (User Terminal)

FIG. 5 is a diagram illustrating an example of a configuration of a user terminal according to an embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmission/reception antenna 230.

Note that the transmitting/receiving section 220 may receive first information including one or more higher layer parameters for a first-type configured grant-based uplink shared channel. In addition, the transmitting/receiving section 220 may receive second information including one or more higher layer parameters for a second-type configured grant-based uplink shared channel. In addition, the transmitting/receiving section 220 may receive third information including one or more higher layer parameters for a dynamic grant-based uplink shared channel.

The control section 210 may determine the higher layer parameter to be applied from the first information on the basis of the notification by the higher layer signaling.

The control section 210 may determine the higher layer parameter to be applied from the second information on the basis of downlink control information that gives an instruction of activation of transmission of the second-type configured grant-based uplink shared channel. Higher layer parameters related to a specific format of the downlink control information may be included in the second information and the third information.

In a case where the downlink control information is a specific format, the control section 210 may apply the higher layer parameter related to the specific format.

In a case where the control section 210 receives information regarding a first number of repetitions notification of which is provided in a higher layer parameter corresponding to time domain resource allocation information, and information regarding a second number of repetitions notification of which is provided in a higher layer parameter corresponding to a number of repetitions, the control section 210 may select one of the first number and the second number.

### (Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the functions include, but are not limited to, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (component) that has a transmission function may be referred to as a transmitting section (transmitting unit), a transmitter, and the like. In any case, as described above, the implementation method is not particularly limited.

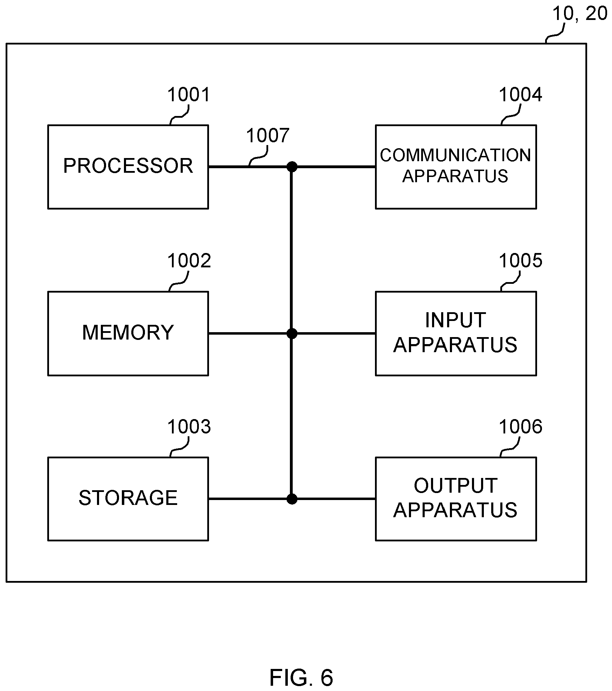

For example, the base station, the user terminal, or the like according to one embodiment of the present disclosure may function as a computer that executes the processing of the radio communication method in the present disclosure. FIG. 6 is a diagram illustrating an example of a hardware configuration of the base station and the user terminal according to an embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit are interchangeable. The hardware configuration of the base station 10 and the user terminal 20 may include one or more apparatuses illustrated in the drawings, or does not have to include some apparatuses.

For example, although only one processor 1001 is illustrated, a plurality of processors may be provided. Further, the processing may be executed by one processor, or the processing may be executed by two or more processors simultaneously or sequentially, or by using other methods. Note that the processor 1001 may be implemented by one or more chips.

Each of the functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data from and in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Further, the processor 1001 reads a program (program code), a software module, data, and the like from at least one of the storage 1003 and the communication apparatus 1004 into the memory 1002, and performs various types of processing according to them. As the program, a program that causes a computer to execute at least a part of the operation described in the above-described embodiment is used. For example, the control section 110 (210) may be implemented by a control program that is stored in the memory 1002 and is operated in the processor 1001, and other functional blocks may be implemented similarly.

The memory 1002 is a computer-readable recording medium, and may be implemented by, for example, at least one of a read only memory (ROM), an erasable programmable ROM (EPROM), an electrically EPROM (EEPROM), a random access memory (RAM), and/or other appropriate storage media. The memory 1002 may be referred to as a register, a cache, a main memory (primary storage apparatus), and the like. The memory 1002 can store a program (program code), a software module, and the like, which are executable for implementing the radio communication method according to an embodiment of the present disclosure.

The storage 1003 is a computer-readable recording medium, and may be implemented by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and/or other appropriate storage media. The storage 1003 may be referred to as an auxiliary storage device.

The communication apparatus 1004 is hardware (transmission/reception device) for performing inter-computer communication via at least one of a wired network and a radio network, and is referred to as, for example, a network device, a network controller, a network card, and a communication module. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by a transmission section 120a (220a) and a reception section 120b (220b) physically or logically separated from each other.

The input apparatus 1005 is an input device that receives an input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Further, the respective apparatuses such as the processor 1001 and the memory 1002, are connected by the bus 1007 to communicate information. The bus 1007 may be formed by using a single bus, or may be formed by using different buses for respective connections between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented by using at least one of these pieces of hardware.

### (Modified Example)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Furthermore, a component carrier (CC) may be referred to as a cell, a frequency carrier, a carrier frequency, and the like.

A radio frame may include one or more periods (frames) in a time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a given signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

The slot may include one or more symbols (for example, orthogonal frequency division multiplexing (OFDM) symbol and single carrier frequency division multiple access (SC-FDMA) symbol) in the time domain. Further, the slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". The PDSCH (or PUSCH) transmitted using the mini slot may be referred to as PDSCH (PUSCH) mapping type B.

The radio frame, the subframe, the slot, the mini slot, and the symbol all represent the time unit in signal transmission. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI. A plurality of consecutive subframes may be referred to as TTI. One slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that a unit that represents the TTI may be referred to as the slot, the mini slot, and the like, instead of the subframe.

Here, the TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that the definition of the TTI is not limited thereto.

The TTI may be a transmission time unit of channel-encoded data packets (transport blocks), code blocks, codewords, or the like, or may be a processing unit in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as the TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a normal TTI, a subframe, or the like) may be interchangeable with a TTI having a time duration exceeding 1 ms, and a short TTI (for example, a shortened TTI) may be interchangeable with a TTI having a TTI duration less than the TTI duration of the long TTI and not less than 1 ms.

The resource block (RB) is the unit of resource allocation in the time domain and the frequency domain, and may include one or more consecutive subcarriers in the frequency domain. The number of subcarriers included in the RB may be the same regardless of the numerology, and may be twelve, for example. The number of subcarriers included in the RB may be determined based on the numerology.

Further, the RB may include one or more symbols in the time domain, and may have a length of one slot, one mini slot, one subframe, or one TTI. One TTI, one subframe, and the like may each include one or more resource blocks.

Note that one or more RBs may be referred to as a physical resource block (PRB (Physical RB)), a subcarrier group (SCG (Sub-Carrier Group)), a resource element group (REG), a PRB pair, an RB pair, or the like.

Furthermore, a resource block may include one or more resource elements (REs). For example, one RE may be a radio resource field of one subcarrier and one symbol.

The bandwidth part (BWP) (which may also be referred to as a partial bandwidth or the like) may represent a subset of consecutive common resource blocks (RBs) for given numerology in a given carrier. Here, the common RB may be specified by the index of the RB based on a common reference point of the carrier. The PRB may be defined in a given BWP and be numbered within the BWP.

The BWP may include a BWP for UL (UL BWP) and a BWP for DL (DL BWP). For the UE, one or more BWPs may be configured within one carrier.

At least one of the configured BWPs may be active, and it does not have to be assumed that the UE transmits and receives a given signal/channel outside the active BWP. Note that a "cell", a "carrier", or the like in the present disclosure may be interchangeable with the "BWP".

Note that the structures of the above-described radio frame, subframe, slot, mini slot, symbol, and the like are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, the radio resource may be specified by a given index.

The names used for parameters and the like in the present disclosure are in no respect limitative. Further, any mathematical expression or the like that uses these parameters may differ from those explicitly disclosed in the present disclosure. Various channels (PUCCH, PDCCH, and the like) and information elements can be identified by any suitable names. Therefore, various names allocated to these various channels and information elements are in no respect limitative.

The information, a signal, and the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or an arbitrary combination thereof.

Further, information, a signal, and the like can be output in at least one of a direction from a higher layer to a lower layer and a direction from a lower layer to a higher layer. Information, a signal, and the like may be input/output via a plurality of network nodes.

The input and/or output information, signal, and the like can be stored in a specific location (for example, a memory) or can be managed using a management table. The information, signals, and the like to be input and output can be overwritten, updated, or appended. The output information, signals, and the like may be deleted. The input information, signal, and the like may be transmitted to another apparatus.

Notification of information may be performed not only by using the aspects/embodiments described in the present disclosure but also using another method. For example, the notification of information in the present disclosure may be performed using physical layer signaling (e.g., downlink control information (DCI), uplink control information (UCI), higher layer signaling (e.g., radio resource control (RRC) signaling, broadcast information (master information block (MIB), system information block (SIB), or the like), medium access control (MAC) signaling, another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, notification of MAC signaling may be performed using, for example, a MAC control element (MAC CE).

Further, notification of given information (e.g., notification of "being X") is not limited to explicit notification but may be performed implicitly (for example, by not performing notification of the given information or by performing notification of another piece of information).

Judging may be performed using values represented by one bit (0 or 1), may be performed using Boolean values represented by true or false, or may be performed by comparing numerical values (for example, comparison with a given value).

Regardless of whether software is referred to as software, firmware, middleware, microcode, or hardware description language, or referred to as other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or other remote sources by using at least one of wired technology (a coaxial cable, an optical fiber cable, a twisted-pair cable, a digital subscriber line (DSL), and the like) and wireless technology (infrared light, microwaves, and the like), at least one of the wired technology and the wireless technology is included in the definition of the transmission medium.

The terms "system" and "network" used in the present disclosure can be used interchangeably. The "network" may mean an apparatus (for example, the base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be interchangeable with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be interchangeable with a side channel.

Similarly, the user terminal in the present disclosure may be interchangeable with the base station. In this case, the base station 10 may have the above-described functions of the user terminal 20.

In the present disclosure, the operation performed by the base station may be performed by an upper node thereof in some cases. In a network including one or more network nodes with base stations, it is clear that various operations performed for communication with a terminal can be performed by a base station, one or more network nodes (examples of which include but are not limited to a mobility management entity (MME) and a serving-gateway (S-GW)) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" used in the present disclosure does not mean "based only on", unless otherwise specified. In other words, the phrase "based on" means both "based only on" and "based at least on".

Any reference to elements with designations such as "first", "second", and the like used in the present disclosure does not generally limit the amount or order of these elements. These designations can be used in the present disclosure, as a convenient way of distinguishing between two or more elements. Therefore, reference to the first and second elements does not mean that only two elements are adoptable, or that the first element must precede the second element in some way.

The term "determining" used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of an operation.

Further, "determining" may be interchangeable with "assuming", "expecting", "considering", and the like.

The term "maximum transmission power" described in the present disclosure may mean the maximum value of transmission power, the nominal UE maximum transmit power, or the rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interchangeable with "access".

In the present disclosure, when two elements are connected, these elements may be considered to be "connected" or "coupled" to each other by using one or more electrical wires, cables, printed electrical connections, and the like, and by using, as some non-limiting and non-inclusive examples, electromagnetic energy having a wavelength in the radio frequency domain, microwave domain, and optical (both visible and invisible) domain, and the like.

In the present disclosure, the phrase "A and B are different" may mean "A and B are different from each other". Note that the phrase may mean that "A and B are different from C". The terms such as "leave", "coupled", and the like may be interpreted as "different".

When the terms "include", "including", and variations thereof are used in the present disclosure, these terms are intended to be inclusive similarly to the term "comprising". Furthermore, the term "or" used in the present disclosure is intended not to be exclusive-OR.

In the present disclosure, when English articles such as "a", "an", and "the" are added in translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the scope of the invention defined on the basis of the description of claims. Thus, the description of the present disclosure is for the purpose of explaining examples and does not bring any limiting meaning to the invention according to the present disclosure.

## Claims

1. A terminal (20) comprising:
a receiving section (220) configured to receive first information including one or more higher layer parameters for a first uplink shared channel that is dynamically scheduled by first downlink control information, and second information including one or more higher layer parameters for a second uplink shared channel whose activation is controlled by second downlink control information, the second uplink shared channel being based on a configured grant; and
a control section (210) configured to determine, based on a format of the second downlink control information, whether to apply a specific higher layer parameter included in the first information to transmission of the second uplink shared channel.

2. The terminal (20) according to claim 1, wherein, when the format of the second downlink control information is a specific downlink control information format, the control section (210) is configured to control the transmission of the second uplink shared channel by using the one or more higher layer parameters included in the second information and the specific higher layer parameter included in the first information.

3. The terminal (20) according to claim 2, wherein the specific higher layer parameter relates to scheduling granularity that is applied to an indication of a starting position and a length of resource allocation type 1 for the specific downlink control information format.

4. A radio communication method for a terminal (20), comprising:
receiving first information including one or more higher layer parameters for a first uplink shared channel that is dynamically scheduled by first downlink control information, and second information including one or more higher layer parameters for a second uplink shared channel whose activation is controlled by second downlink control information, the second uplink shared channel being based on a configured grant; and
determining, based on a format of the second downlink control information, whether to apply a specific higher layer parameter included in the first information to transmission of the second uplink shared channel.

5. A base station (10) comprising:
a transmitting section (120) configured to transmit first information including one or more higher layer parameters for a first uplink shared channel that is dynamically scheduled by first downlink control information, and second information including one or more higher layer parameters for a second uplink shared channel whose activation is controlled by second downlink control information, the second uplink shared channel being based on a configured grant; and
a control section (110) configured to control, based on a format of the second downlink control information, whether a specific higher layer parameter included in the first information is applied to transmission of the second uplink shared channel.

6. A system comprising a terminal (20) and a base station (10), wherein
the terminal (20) comprises:
a receiving section (220) configured to receive first information including one or more higher layer parameters for a first uplink shared channel that is dynamically scheduled by first downlink control information, and second information including one or more higher layer parameters for a second uplink shared channel whose activation is controlled by second downlink control information, the second uplink shared channel being based on a configured grant; and
a control section (210) configured to determine, based on a format of the second downlink control information, whether to apply a specific higher layer parameter included in the first information to transmission of the second uplink shared channel, and
the base station (10) comprises:
a transmitting section (120) configured to transmit the first information and the second information; and
a control section (110) configured to control, based on the format of the second downlink control information, whether the specific higher layer parameter included in the first information is applied to the transmission of the second uplink shared channel.

## Patentansprüche

1. Endgerät (20), umfassend:
einen Empfangsabschnitt (220), der so konfiguriert ist, dass er erste Informationen empfängt, die einen oder mehrere Parameter einer höheren Schicht für einen ersten gemeinsam genutzten Aufwärtsverbindungskanal einschließen, der durch erste Abwärtsverbindungssteuerinformationen dynamisch geplant ist, und zweite Informationen, die einen oder mehrere Parameter einer höheren Schicht für einen zweiten gemeinsam genutzten Aufwärtsverbindungskanal einschließen, dessen Aktivierung durch zweite Abwärtsverbindungssteuerinformationen gesteuert wird, wobei der zweite gemeinsam genutzte Aufwärtsverbindungskanal auf einer konfigurierten Gewährung basiert; und
einen Steuerabschnitt (210), der so konfiguriert ist, dass er auf der Grundlage eines Formats der zweiten Abwärtsverbindungssteuerinformationen bestimmt, ob ein spezifischer Parameter einer höheren Schicht, der in den ersten Informationen eingeschlossen ist, auf eine Übertragung des zweiten gemeinsam genutzten Aufwärtsverbindungskanals angewendet werden soll.

2. Endgerät (20) nach Anspruch 1, wobei, wenn das Format der zweiten Abwärtsverbindungssteuerinformationen ein spezifisches Abwärtsverbindungssteuerinformationsformat ist, der Steuerabschnitt (210) so konfiguriert ist, dass er die Übertragung des zweiten gemeinsam genutzten Aufwärtsverbindungskanals unter Verwendung des einen oder der mehreren Parameter einer höheren Schicht, die in den zweiten Informationen eingeschlossen sind, und des spezifischen Parameters einer höheren Schicht, der in den ersten Informationen eingeschlossen ist, steuert.

3. Endgerät (20) nach Anspruch 2, wobei sich der spezifische Parameter einer höheren Schicht auf eine Planungsgranularität bezieht, die auf eine Angabe einer Startposition und einer Länge des Ressourcenzuweisungstyps 1 für das spezifische Abwärtsverbindungssteuerinformationsformat angewendet wird.

4. Funkkommunikationsverfahren für ein Endgerät (20), umfassend:
Empfangen von ersten Informationen, die einen oder mehrere Parameter einer höheren Schicht für einen ersten gemeinsam genutzten Aufwärtsverbindungskanal einschließen, der durch erste Abwärtsverbindungssteuerinformationen dynamisch geplant ist, und von zweiten Informationen, die einen oder mehrere Parameter einer höheren Schicht für einen zweiten gemeinsam genutzten Aufwärtsverbindungskanal einschließen, dessen Aktivierung durch zweite Abwärtsverbindungssteuerinformationen gesteuert wird, wobei der zweite gemeinsam genutzte Aufwärtsverbindungskanal auf einer konfigurierten Gewährung basiert; und
Bestimmen, basierend auf einem Format der zweiten Abwärtsverbindungssteuerinformationen, ob ein spezifischer Parameter einer höheren Schicht, der in den ersten Informationen eingeschlossen ist, auf eine Übertragung des zweiten gemeinsam genutzten Aufwärtsverbindungskanals angewendet werden soll.

5. Basisstation (10), die umfasst:
einen Übertragungsabschnitt (120), der so konfiguriert ist, dass er erste Informationen überträgt, die einen oder mehrere Parameter einer höheren Schicht für einen ersten gemeinsam genutzten Aufwärtsverbindungskanal einschließen, der durch erste Abwärtsverbindungssteuerinformationen dynamisch geplant ist, und zweite Informationen, die einen oder mehrere Parameter einer höheren Schicht für einen zweiten gemeinsam genutzten Aufwärtsverbindungskanal einschließen, dessen Aktivierung durch zweite Abwärtsverbindungssteuerinformationen gesteuert wird, wobei der zweite gemeinsam genutzte Aufwärtsverbindungskanal auf einer konfigurierten Gewährung basiert; und
einen Steuerabschnitt (110), der so konfiguriert ist, dass er auf der Grundlage eines Formats der zweiten Abwärtsverbindungssteuerinformationen steuert, ob ein spezifischer Parameter einer höheren Schicht, der in den ersten Informationen eingeschlossen ist, auf eine Übertragung des zweiten gemeinsam genutzten Aufwärtsverbindungskanals angewendet werden soll.

6. System, das ein Endgerät (20) und eine Basisstation (10) umfasst, wobei das Endgerät (20) umfasst:
einen Empfangsabschnitt (220), der so konfiguriert ist, dass er erste Informationen empfängt, die einen oder mehrere Parameter einer höheren Schicht für einen ersten gemeinsam genutzten Aufwärtsverbindungskanal einschließen, der durch erste Abwärtsverbindungssteuerinformationen dynamisch geplant ist, und zweite Informationen, die einen oder mehrere Parameter einer höheren Schicht für einen zweiten gemeinsam genutzten Aufwärtsverbindungskanal einschließen, dessen Aktivierung durch zweite Abwärtsverbindungssteuerinformationen gesteuert wird, wobei der zweite gemeinsam genutzte Aufwärtsverbindungskanal auf einer konfigurierten Gewährung basiert; und
einen Steuerabschnitt (210), der so konfiguriert ist, dass er auf der Grundlage eines Formats der zweiten Abwärtsverbindungssteuerinformationen bestimmt, ob ein spezifischer Parameter einer höheren Schicht, der in den ersten Informationen eingeschlossen ist, auf eine Übertragung des zweiten gemeinsam genutzten Aufwärtsverbindungskanals angewendet werden soll, und
die Basisstation (10) umfasst:
einen Übertragungsabschnitt (120), der so konfiguriert ist, dass er die ersten Informationen und die zweiten Informationen überträgt; und
einen Steuerabschnitt (110), der so konfiguriert ist, dass er auf der Grundlage des Formats der zweiten Abwärtsverbindungssteuerinformationen steuert, ob der in den ersten Informationen eingeschlossene spezifische Parameter einer höheren Schicht auf die Übertragung des zweiten gemeinsam genutzten Aufwärtsverbindungskanals angewendet wird.

## Revendications

1. Terminal (20) comprenant :
une section de réception (220) configurée pour recevoir des premières informations incluant un ou plusieurs paramètres de couche supérieure pour un premier canal partagé de liaison montante qui est planifié de façon dynamique par des premières informations de commande de liaison descendante, et
des deuxièmes informations incluant un ou plusieurs paramètres de couche supérieure pour un deuxième canal partagé de liaison montante dont l'activation est commandée par des deuxièmes informations de commande de liaison descendante, le deuxième canal partagé de liaison montante étant basé sur une autorisation configurée ; et
une section de commande (210) configurée pour déterminer, sur la base d'un format des deuxièmes informations de commande de liaison descendante, si oui ou non, il convient d'appliquer un paramètre de couche supérieure spécifique inclus dans les premières informations pour la transmission du deuxième canal partagé de liaison montante.

2. Terminal (20) selon la revendication 1, dans lequel, lorsque le format des deuxièmes informations de commande de liaison descendante est un format d'informations de commande de liaison descendante spécifique, la section de commande (210) est configurée pour commander la transmission du deuxième canal partagé de liaison montante au moyen du ou des paramètres de couche supérieure inclus dans les deuxièmes informations et du paramètre de couche supérieure spécifique inclus dans les premières informations.

3. Terminal (20) selon la revendication 2, dans lequel le paramètre de couche supérieure spécifique concerne une granularité de planification qui est appliquée à une indication d'une position de départ et une longueur de type 1 d'attribution de ressources pour le format d'informations de commande de liaison descendante spécifique.

4. Procédé de communication radio pour un terminal (20), comprenant :
la réception de premières informations incluant un ou plusieurs paramètres de couche supérieure pour un premier canal partagé de liaison montante qui est planifié de façon dynamique par des premières informations de commande de liaison descendante, et de deuxièmes informations incluant un ou plusieurs paramètres de couche supérieure pour un deuxième canal partagé de liaison montante dont l'activation est commandée par des deuxièmes informations de commande de liaison descendante, le deuxième canal partagé de liaison montante étant basé sur une autorisation configurée ; et
la détermination, sur la base d'un format des deuxièmes informations de commande de liaison descendante, si oui ou non, il convient d'appliquer un paramètre de couche supérieure spécifique inclus dans les premières informations pour la transmission du deuxième canal partagé de liaison montante.

5. Station de base (10) comprenant :
une section de transmission (120) configurée pour transmettre des premières informations incluant un ou plusieurs paramètres de couche supérieure pour un premier canal partagé de liaison montante qui est planifié de façon dynamique par des premières informations de commande de liaison descendante, et des deuxièmes informations incluant un ou plusieurs paramètres de couche supérieure pour un deuxième canal partagé de liaison montante dont l'activation est commandée par des deuxièmes informations de commande de liaison descendante, le deuxième canal partagé de liaison montante étant basé sur une autorisation configurée ; et
une section de commande (110) configurée pour commander, sur la base d'un format des deuxièmes informations de commande de liaison descendante, si oui ou non, un paramètre de couche supérieure spécifique inclus dans les premières informations est appliqué à la transmission du deuxième canal partagé de liaison montante.

6. Système comprenant un terminal (20) et une station de base (10), dans lequel le terminal (20) comprend :
une section de réception (220) configurée pour recevoir des premières informations incluant un ou plusieurs paramètres de couche supérieure pour un premier canal partagé de liaison montante qui est planifié de façon dynamique par des premières informations de commande de liaison descendante, et des deuxièmes informations incluant un ou plusieurs paramètres de couche supérieure pour un deuxième canal partagé de liaison montante dont l'activation est commandée par des deuxièmes informations de commande de liaison descendante, le deuxième canal partagé de liaison montante étant basé sur une autorisation configurée ; et
une section de commande (210) configurée pour déterminer, sur la base d'un format des deuxièmes informations de commande de liaison descendante, si oui ou non, il convient d'appliquer un paramètre de couche supérieure spécifique inclus dans les premières informations à la transmission du deuxième canal partagé de liaison montante, et
la station de base (10) comprend :
une section de transmission (120) configurée pour transmettre les premières informations et les deuxièmes informations ; et
une section de commande (110) configurée pour commander, sur la base du format des deuxièmes informations de commande de liaison descendante, si oui ou non, le paramètre de couche supérieure spécifique inclus dans les premières informations est appliqué à la transmission du deuxième canal partagé de liaison montante.
